# EUROPEAN PATENT SPECIFICATION

(11) **EP 3 026 938 B1**
(45) Date of publication and mention of the grant of the patent: **30.08.2017**
(21) Application number: 14462010.1
(22) Date of filing: 28.11.2014
(51) Int. Cl.: H04W 4/02

(54) **A method for tracking of motion of objects associated with wireless communication devices within a predefined area**
Verfahren zur Nachverfolgung von bewegten Objekten mit drahtlosen Kommunikationsvorrichtungen in einem vorgegebenen Bereich
Procédé de suivi de mouvement d'objets associés à des dispositifs de communication sans fil dans une zone prédéfinie

(43) Date of publication of application: 01.06.2016
(73) Proprietor: Szegedi Tudományegyetem, 6720 Szeged (HU)
(72) Inventor: Nagy, Sándor, H-6771 Szeged (HU); Gyimóthy, Tibor, H-6726 Szeged (HU); Jelasity, Márk, H-6726 Szeged (HU); Bilicki, Vilmos, H-6725 Szeged (HU); Végh, Ádám, H-6725 Szeged (HU)
(74) Representative: Harangozo, Gabor

(56) References cited:
- US-A1- 2008 089 298
- US-A1- 2012 115 475
- US-A1- 2014 045 519

## Description

The invention relates to tracking of the motion and trajectory of objects associated with wireless communication devices, within predefined areas, according to the preamble of independent claim 1. In particular, the invention relates to the determination of the flow rate, within predefined areas, of devices, entities classified into diverse transport categories, by estimating various movements in free areas, roads and streets and determining the expected speed of progress, and the assignment of the entities concerned into transport groups.

Measurement takes place by tracing the mobile phone devices of the traffic participants by monitoring the WIFI-capable devices present in the given area.

Localisation based on passive wireless communication - e.g. WIFI - is not a recent idea. A known solution is presented in: A.B.M. Musa and Jakob Eriksson: "Tracking Unmodified Smart-phones Using Wi-Fi Monitors", published in 2012, available *inter alia* on the following website:

### http://www.engr.uic.edu/pub/Bits/Musa/musa-eriksson-sensys12.pdf

US 2012115475 A1 discloses methods and apparatuses are for population tracking, counting and/or movement estimation. In one embodiment, the method comprises receiving mobile phone operational data indicative of user equipment location, where the event data includes location area update messages and periodic registration messages; and performing travel estimation based on the mobile phone operation data, including performing interpolation on data associated with one or more individuals in a population to estimate intermediate positions of a trajectory of each of the one or more individuals for a specified time period based on a shortest path mesh sequence estimation algorithm. Data collection, analysis and evaluation are performed by the aid of centralized server means.

The objective of the present invention is to create a method that is simpler, more reliable and at the same time cheaper than the known ones, capable of providing a reliable answer to the question concerning the intensity and main directions of passenger or motor vehicle traffic in a predefined, designated area, and the distribution of the traffic participants by said categories. Our objective is, moreover, to produce such results by this method as can be applied universally for making analyses and statistics, and to project a comprehensive review of the traffic of a chosen site in the monitored period. A further objective of present invention is to monitor individual objects, entities, and to make available the monitoring results without the potential disclosure of any specific personal data, in conformity with the various data protection requirements and regulations.

The present invention is disclosed in appended claim 1. It is based on the recognition that the objective can be realised by taking as a basis the existing unique and unalterable identifier of any integrated or associated small-range wireless communication device of moving objects - in other equivalent, words, entities - , and modifying said identifier after detection in a manner that the device should remain clearly assigned to the identifier, but the identifier should grant adequate anonymity during further processing and utilisation.

One of the main features and advantages of the method according to the present invention is its being a passive solution that does not require to run a special code on the devices of the traffic participants that would either perform active analysis or supply information on a regular basis to a server. For this purpose the presence of a wireless communication client is utilized, e.g. WIFI client, integrated of necessity in the device, e.g. smart phone, carried by the moving object or entity which, under certain - default case - circumstances keeps looking for connection with the WIFI access points anyway, and therefore its presence can be established in a particular area. Based on the signal strength of the WIFI client measured at access points, it is possible to estimate its distance from one or more measuring points.

This task has been solved by a method according to the features of claim 1.

Preferred embodiments of the invention are listed in the dependent claims.

In what follows, the invention will be presented in more detail with reference to the enclosed drawings illustrating exemplary embodiments of the proposed method. In the drawing,
- Figure 1: shows schematically a mesh network created in the monitored area,
- Figure 2: shows a flowchart of a possible selection strategy of the maximal number of P2P entities,
- Figure 3: shows the flowchart of a possible way to designate an assignment of the client to a peer in a zone of uncertainty,
- Figures 4A and 4B: show a flowchart of a possible decision-making process for division, and
- Figure 5: presents a possible pseudo code of the process presented in Figures 4A and 4B.

In the following the method according to the present invention will be presented in relation to a system using WIFI protocol as small-range communication protocol. In the description, the term "access point" or "AP" will be used essentially in connection with WIFI network communication; the term "mesh" in connection with the architecture, and "peer" in connection with peer computing, i. e. a calculation method, in connection with a graph node. The method requires the installation of several, preferably many, intelligent WIFI access points (hereinafter: AP) in adequate density, something that can be done relatively cheaply. The intelligent access point is capable, on the one hand, to collect and process local information and measurement data concerning the devices to be monitored, and, on the other hand, to form a WIFI network with the other access points that provides for low bandwidth communication covering the area throughout a system implementing the proposed method. With this method, one may minimise the traffic by on-site processing and local P2P communication and, on the other hand, enhance the protection of personal data. It is possible to retrieve such high-level information as the movement speed of entity types of different categories along a given trajectory in a given segment, or an estimated number of items. The present invention realises data collection, data analysis and evaluation without the deed of any central server, in a P2P (Peer to Peer) way, as is disclosed e.g. in the document https://www.cs.uic.edu/pub/Bits/Musa/musaeriksson-sensys12.pdf.

The shown exemplary implementation of the method according to the present invention, shown here merely as a preferred embodiment, can be divided into two phases. The first, preparatory, phase is to be implemented once, during the assessment of the detected signal strengths and the consequent assignment of WIFI clients - any device suitable for the given wireless communication, e.g. smartphone - to a WIFI access point. During Phase 1, a model, e.g. a machine learning method, is constructed automatically on the basis of the signal strength measurement results that can predict, on the basis of the signal strength of the measured WIFI client, the access point to which the WIFI client is closest. To prevent the full-scale identification of a device, the monitored identification parameter of the device - in the present example its MAC address - will be anonymised. This can be solved by using a method, known to those skilled in the art, that provides for a unidirectional and clear assignment, for example, MD5.

The second, phase - phase of use - relies on the previous model to calculate holding speed, average speed and movement history on a continuous basis with the P2P methodology, and to estimate on their basis and based on their correlation and analysis the type of the moving object (pedestrian, private or public transport passenger) emitting the detected WIFI signal, provided that WIFI is used for small-range communication.

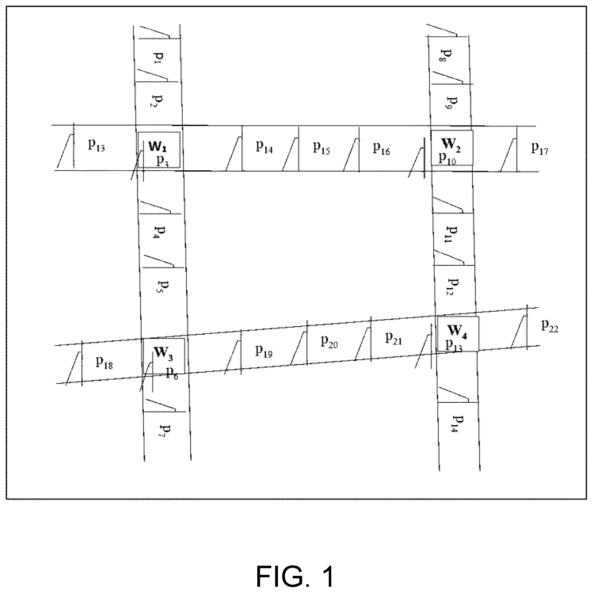

As can be seen in Figure 1, in the exemplary solution, the WIFI access points are installed, if possible, at crossroads and at approximately every 300 m along long road sections without crossings. The access points form a mesh network known to those skilled in the art - see e.g. "http://en.wikipedia.org/wiki/Mesh_networking" or " http://uc-free.hu/?q=node/13" web sources-, and the access points within each other's range are mapped by running an appropriate known mesh network software. In the following, the network nodes formed by these access points will be called also peers.

The method defines, on the one hand, the moving objects by their associated, e.g. integrated or associated, devices - WIFI clients. During the process, the strength of the signals received from the monitored device at every Wᵢ access point is measured at detection points pᵢ, characterised by higher resolution than the mesh network formed of the WIFI access points, being installed at e.g. 10 m from each other between two access points. Each detection point pᵢ is identifiable by co-ordinates in a map. The specific detection points pᵢ are associated- provided that several measurements are made - with a set comprising vectors [E(W₁), E(W₂),...,E(Wₙ)], where E() means signal strength.

In the method presented here, detection points pᵢ are assigned to a Wᵢ WIFI access point each, depending the Wᵢ access points to which the monitored device with WIFI capability is closest. The assignment can be e.g. automatic, based on the GPS data and on a map. The map can be e.g. the Google map, and the GPS data are measured and provided by the smart phone being used as WIFI client.

In Phase 1 of the present invention, a model is defined manually or automatically, that will then predict to which WIFI access point the given device or in other words WIFI client is closest, together with the relevant probability. Such a model is disclosed e.g. in the web-based source "http://ait.iit.uni-miskolc.hu/∼dudas/MIEAok/Mlea10.PDF". According to the proposed method, this model can be any machine learning or statistical model, but it can also simply be a function defining the position of maximum of the signal strength. With calculation and communication via a centralised server, according to prior art, model prediction would mean that a central predictive model provides for a newly measured signal strength vector that k=F(E(W₁), E(W₂),...,E(Wₙ)), where k is the index of the Wₖ access point closest to the WIFI client concerned. Moreover, function F will not necessarily define an access point, but it can also show that the device is not in the monitored zone or it is uncertain, i.e. shall remain unclassified. Function F() may be in this case e.g. an artificial neural network (ANN) trained based on initial measurements, with an intermediate layer and N+1 neurons in the output layer, where N is the number of WIFI access points, and the extra output neuron is reserved for the unclassified category.

In the method provided by the present invention, the nearest access point is not defined with a model run on a central server, but with the help of a shared peer-to-peer solution. Adjacency relationship, often a mesh-structured proximity graph, is defined between the specific Wᵢ access points (mesh). Every peer node models by its proper representation (e.g., neural network or any of the previously mentioned general models) whether it is the one that is closest to a given object with WIFI capability or associated with such device located at a given detection point pᵢ. This is how, based on the signal strength vectors originating from the adjacent peers and its own measurements, it decides whether an object is closest to it and which what probability (where a neural network is applied, that will provide a real point value).

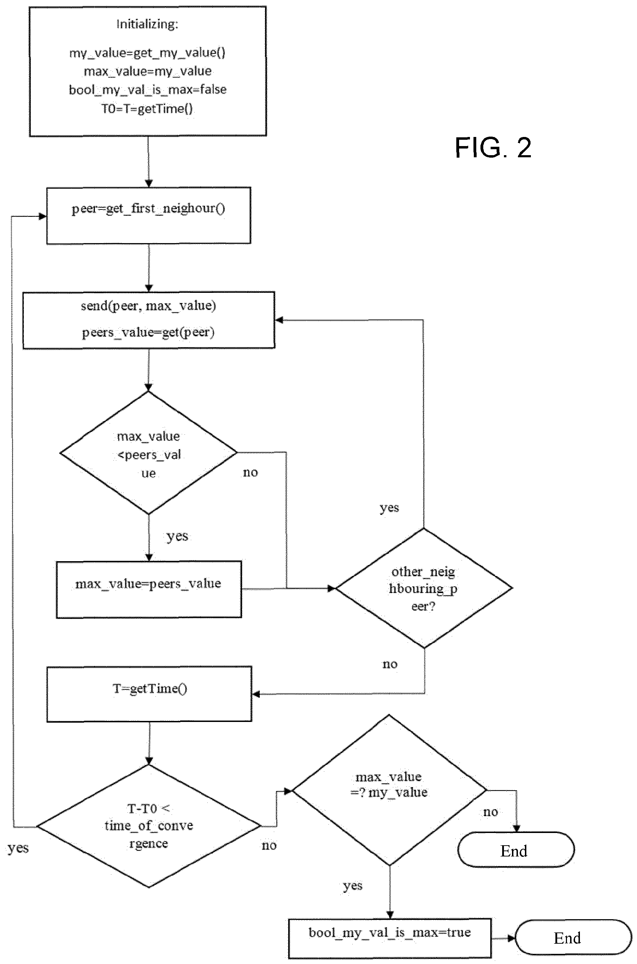

Consequently, in the present invention one may decide by peer node to which access point a given object emitting a WIFI signal is nearest, based on a short communication with the adjacent entities, according to the flowchart presented in Figure 2 referring to an access point forming a node: this is the strategy for selecting which P2P element contains the maximal value.

It is an essential feature of the invention that conclusions will be drawn exclusively on the basis of the observation of moving objects; the evaluation of non-moving hardware devices looking for WiFi access points is to be avoided, as these devices do not count in the analysis of the traffic.

In the present invention, motion is the starting point of the analyses. The inference to motion is based on the measureable and measured change of the nearest WIFI access point associated with the object. Where the nearest access point remains identical, no movement takes place, or if it did, it could not be detected by the method and system of devices shown here.

Phase 2 of the present invention, i.e., that of its use, is a P2P based movement analysis, meaning the following in more detail. Considering the foregoing, every peer node has a list comprising the WIFI client that is closest to it. The WIFI client is identified in the present case on the basis of its unique MAC address or the extracted value of the latter, included in every communication message packet, cf. e.g. the internet reference: "http://www.wildpackets.com/resources/compendium/wireless lan/wlan packets". Any major movement of the WIFI client entails some change: according to the next evaluation of the models, the WIFI client will already be closest to an adjacent access point, and that access point will define, based on communication with the adjacent access points, the one to which the object used to be nearest. Thus it is possible to generate a "history" for each node of the WIFI clients closest to it that will comprise the previous AP nodes and the appropriate measurement time stamps, i.e. when the WIFI client was closest which node. This history is easy to construct by P2P communication, by querying the neighbours, and by expanding the history with own data.

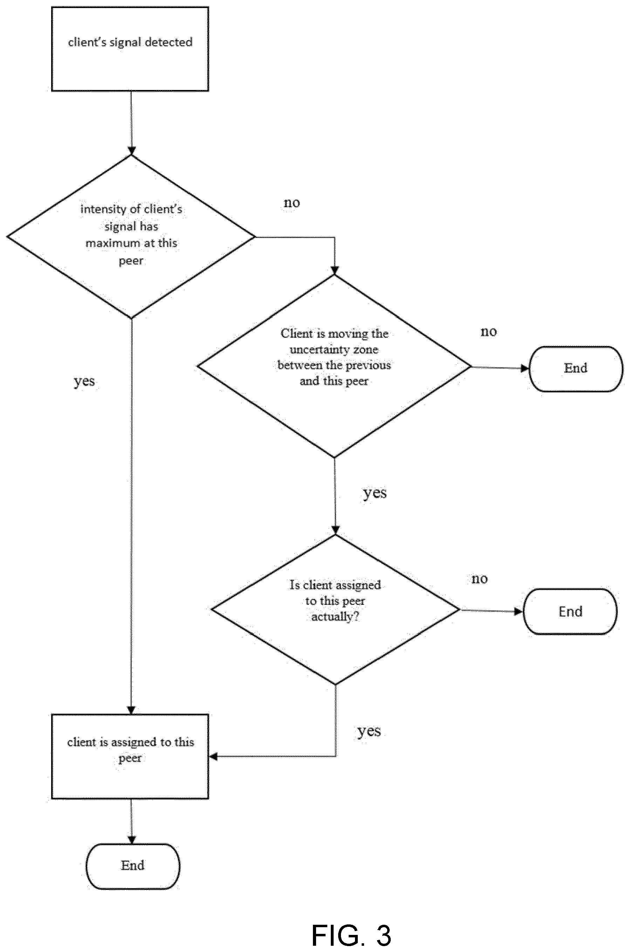

The present invention may also offer a solution for the case when the previously outlined location determination becomes noisy due to the movement of the WIFI client. This may happen when the WIFI client reaches a boundary point where it is assigned to a new closest access point. It may happen that assignment to an access point keeps changing back and forth between one or several access points due to signal fluctuation, noise and/or uncertainty. To solve the problem, a "zone of uncertainty" is designated, with an appropriate number of detection points pᵢ between the specific access points. The uncertainty zone is modelled separately. A history taking into consideration the uncertainty zone is constructed as follows: the zone of uncertainty will belong to the previous access point up to the point when the WIFI client is assigned to another definite access point for the first time; from that time on, the uncertainty zone belongs to the next access point, as is shown in Figure 3.

According to a preferred embodiment of the method according to the invention, the objects to be analysed henceforth are only the ones, in each node, that have a history, that is, the history of which mentions previous nodes, whereas the other data are static, that is, they mean a stationary WIFI or object, and are therefore irrelevant in terms of the present objective.

The method according to the present invention allows to analyse historical data accumulating in the nodes, during which it is possible to estimate such informative data as traffic density and waiting time. Histories present in a node concurrently allow to calculate many essential parameters, and to define traffic speed, and infer to the role of the traffic participant (motorist, pedestrian, public transport passenger) on that basis. Since the distances of the peers are known, the approximate distances of the points where, along a given trajectory, an object gets closer to another peer, are known as well, so it is possible to calculate average speed by section, and it is possible to estimate maximum average speed by calculating the differential of the distance and the corresponding time stamps. Similarly, waiting time by peer node can also be calculated.

In another preferred embodiment of the method according to the present invention, the specific movement categories such as pedestrian, public transport or other motorist, are separated. This may be necessary to prevent the aggregation of all average speed or waiting time data associated with the antecedents (history) that would lead to false results. This may be realised, for example, in the following way:

First public transport vehicles will be separated. Based on the designated route of a public transport vehicle, it is possible to identify one or several WIFI clients with a trajectory history showing close correlation with the former, e.g. the communication devices of passengers travelling through several stops. By comparing the history, average speed and time stamp of these WIFI clients to the history content of the other clients assigned to the same AP node, one can define the other public transport user WIFI clients. This operation is feasible for the trajectory of every public transport vehicle contacting the given access point.

The majority of the remaining movements define the motion of WIFI clients aboard vehicles or held by pedestrians. The set of the histories of these clients is divided into two clusters by a clustering method based on estimated average speed (e.g. k-means or-center or information gain). Such clustering method is disclosed for example in the document shown in the website "http://www-users.cs.umn.edu/^{∼}kumar/dmbook/ch8.pdf": if the division does not seem appropriate, the conclusion to be drawn is that the speed of the vehicle (convoy) does not differ significantly from that of the pedestrians.

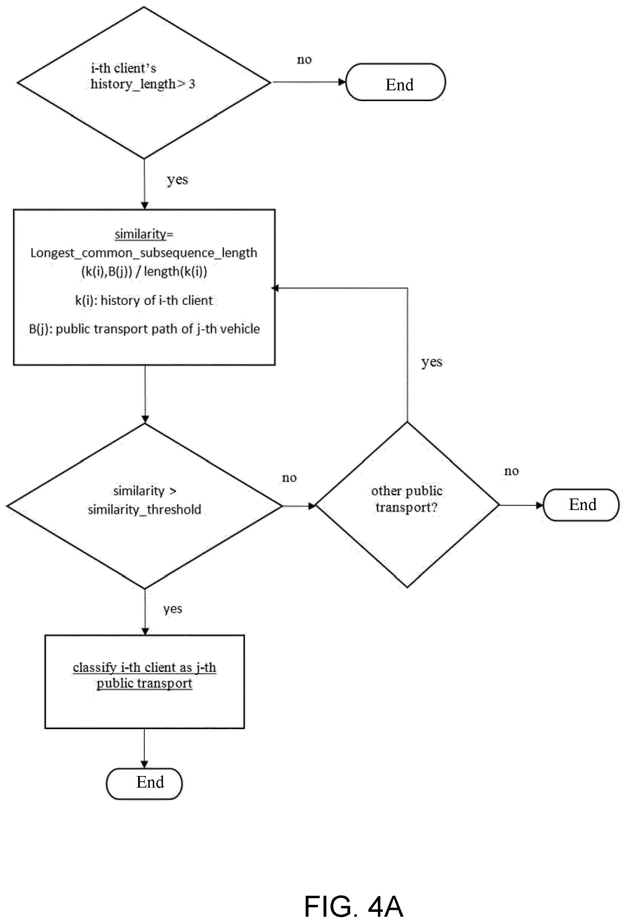

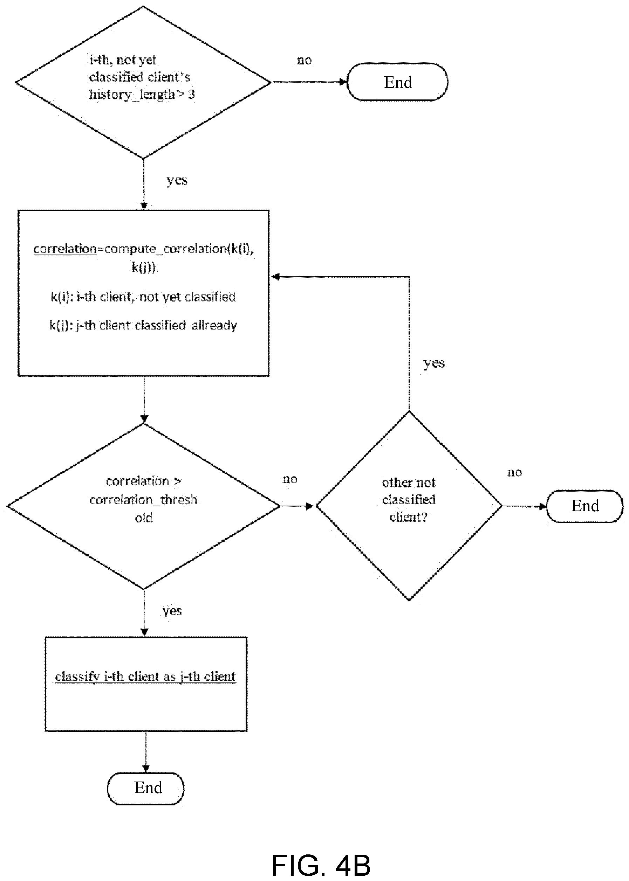

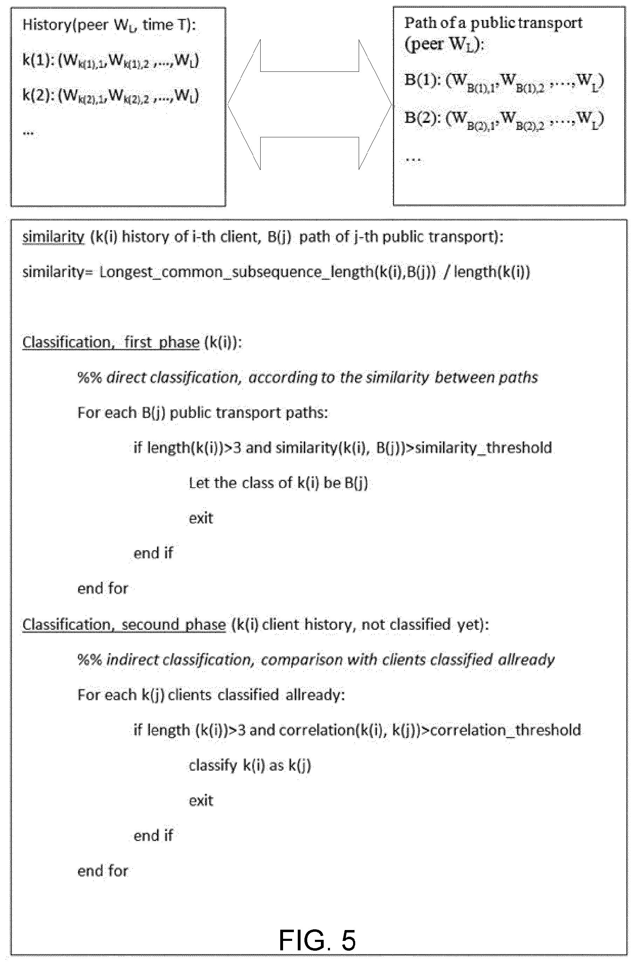

One specific result of the application of the method according to the invention is the understanding of the estimated number, estimated average speed and average waiting time of the moving objects broken down by movement type, on the basis of which the data can also be aggregated at daily level by AP node. Figures 4A, 4B and 5 outline how, by spreading the conclusions at the specific AP nodes over the mesh network, all data will become available and accessible finally at any of the nodes.

## Claims

1. A method for tracking movement and trajectory of objects associated with wireless devices, located in a predefined area,
whereas transceiver nodes communicating with the wireless communication devices are
formed in a predefined area,
the objects associated with the wireless communication devices entering or located in the range of
the transceiver nodes are detected by the latter,
at least one element of a
data group comprising the fact of detection, number of the detected objects and the trajectory of detected moving objects is stored,
the stored information is made available for further processing,
access points functioning according to a small-range wireless communication standard are used as transceiver nodes,
the access points are installed relative to each other at a distance suitable for carrying out wireless "Peer-to-Peer" (P2P) type communication with each other,
the position of a monitored object in the range of at least two access points is defined by the access points with a resolution exceeding that of a detection mesh network formed by the access points, by measuring strength of the signal emitted by the object during communication by the at least two access points, and converting the measured signal strength data into a vector set,
defining the nearest access point with the help of a shared peer-to-peer solution; avoiding evaluation of non-moving hardware devices looking for WiFi access points by selecting and filtering out the objects that are communicating but make no movement by evaluating the vector set; and analysing the movement of the communicating objects changing their place by generating a history for each access point closest to it that will comprise the previous access points and the appropriate measurement time stamps to calculate essential parameters, and to define traffic speed, and to infer to the role of the traffic participant; whereby data collection, data analysis and evaluation is realized without the need of any central server in a P2P (Peer to Peer) way via on-site processing and local P2P communication, and whereby defining the nearest access point with the help of a shared peer-to-peer solution comprising the further steps of:
based on the fact that adjacency relationship is defined between specific access points, modelling at each access point by its proper representation whether a device associated with an object with WIFI capability is located nearest to said respective access point, and
determining by said said respective access point based on the signal strength vectors originating from the adjacent peers and its own measurements, whether the object associated with the device is closest to it, as well as the probability of the result of said determination.

2. Method according to Claim 1, ***characterised in that*** the pre-defined area is associated with a co-ordinate system, and the position of the object is defined by the parameters of said co-ordinate system.

3. Method according to Claim 1 or 2, ***characterised in that*** the detected objects are identified based on their selected identifier parameter.

4. Method according to Claim 1, ***characterised in that*** access points functioning according to the WIFI or Bluetooth or Zigbie or NFC wireless communication standard or recommendation are applied.

5. Method according to any of Claims 1-4, ***characterised in that*** the access points are installed in a distance of not more than300 m from one another.

6. Method according to any of Claims 1-4, ***characterised in that*** the access points are installed at traffic nodes.

7. Method according to Claim 6, ***characterised in that*** the access points are installed at road crossings or junctions.

8. Method according to any of Claims 1-7, ***characterised in that*** the detected objects are grouped on the basis of their trajectory.

9. Method according to Claim 3, ***characterised in that*** the individual objects are identified by their respective unique MAC addresses.

10. Method according to Claim 9, ***characterised in that*** the MAC addresses are anonymised before their utilisation.

11. Method according to any of Claims 1-10, ***characterised in that*** the detected objects are categorised on the basis of at least one of their trajectory or the results of the applied mathematical model.

12. Method according to Claim 11, ***characterised in that*** the objects are assigned to the categories of "pedestrian" or "associated with vehicle".

13. Method according to Claim 12, ***characterised in that*** the "associated with vehicle" category is subdivided into public and private vehicle transport, respectively.

14. Method according to Claim 12 or 13, ***characterised in that*** assignment to the categories of "pedestrian" and "associated with vehicle" is done one the basis of the monitoring and evaluation of the speed parameter of the monitored object.

15. Method according to any of Claims 1-14, ***characterised in that*** one or several pre-defined uncertainty zones are associated with the access points in order to eliminate false data due to noise.

## Patentansprüche

1. Verfahren zur Nachverfolgung der Bewegung und Trajektorie von drahtlosen Geräten zugeordneten Objekten, die sich in einem vordefinierten Bereich befinden,
wobei Sendeempfänger-Datenknoten, die mit den drahtlosen Kommunikationsvorrichtungen kommunizieren, in einem vordefinierten Bereich ausgebildet sind,
und wobei die den drahtlosen Geräten zugeordneten Objekte, die in den Bereich der Sendeempfänger-Datenknoten eintreten oder sich in diesem Bereich befinden, durch die Sendeempfänger-Datenknoten erfasst werden,
mindestens ein Element einer Datengruppe, die die Tatsache der Erfasstheit, die Anzahl der detektierten Objekte und die Trajektorie der detektierten sich bewegenden Objekte enthält, gespeichert wird,
die gespeicherte Information zur Weiterverarbeitung Verfügung gestellt wird,
wobei Zugangspunkte, die gemäß einer Kommunikationsnorm für kurze Reichweiten arbeiten, als Sendeempfänger-Datenknoten eingesetzt sind,
wobei die Zugangspunkte in einem Abstand zueinander installiert sind, der geeignet ist, eine drahtlose Kommunikation des Typs "Peer-to-Peer"(P2P) zwischen den Zugangspunkten durchzuführen,
wobei die Position eines beobachteten Objekts im Bereich von mindestens zwei Zugangspunkten durch die Zugangspunkte mit einer Auflösung definiert wird, die die Auflösung eines von den Zugangspunkten gebildeten Erfassungsnetzes überschreitet, indem eine vom Objekt emittierten Signalstärke während der Kommunikation mit den mindestens zwei Zugangspunkten gemessen und die gemessenen Signalstärke-Daten in einen Vektorsatz umwandelt werden,
der nächstliegende Zugangspunkt mit Hilfe einer gemeinsam benutzten peer-to-peer Lösung bestimmt wird;
wobei die Auswertung sich nicht bewegender Hardware Geräte, die WiFi Zugangspunkte suchen, durch Auswahl und Ausfilterung von Objekten, die eine Kommunikation führen, sich aber nicht bewegen, mittels Auswertung des Vektorsatzes vermieden wird;
und Analysieren der Bewegung der eine Kommunikation führenden Objekte, die ihren Platz ändern, mittels Erzeugen eines Verlaufs für jeden Zugangspunkt, der dem Objekt am nächsten liegt, wobei der Verlauf die vorherigen Zugriffspunkte und die entsprechenden Messzeitstempel umfasst, um wesentliche Parameter zu berechnen, Verkehrsgeschwindigkeit zu bestimmen und auf die Rolle des Verkehrsteilnehmers zu schließen; wobei
Datenerfassung, Datenanalyse und Auswertung erfolgt ohne die Notwendigkeit eines zentralen Servers in einer P2P (Peer to Peer) Weise über lokale Verarbeitung und lokale P2P-Kommunikation, und wobei die Bestimmung des nächsten Zugangspunkts mit Hilfe einer gemeinsam benutzten peer-to-peer Lösung die weiteren Schritte umfasst:
basierend auf der Tatsache, dass die Nachbarschaftsbeziehung zwischen bestimmten Zugangspunkten definiert ist, Modellierung bei jedem Zugangspunkt durch seine korrekte Darstellung, ob eine Vorrichtung, die einem Objekt mit WIFI-Fähigkeit zugeordnet ist, dem jeweiligen Zugangspunkt am nächsten liegt und
Bestimmen durch den jeweiligen Zugriffspunkt auf der Grundlage der Signalstärkevektoren, die von den benachbarten Peers und seinem eigenen Messungen stammen, ob das dem Gerät zugeordnete Objekt am nächsten ist, sowie die Wahrscheinlichkeit des Ergebnisses der Bestimmung.

2. Verfahren nach Anspruch 1, **dadurch gekennzeichnet, dass** der vordefinierte Bereich einem Koordinatensystem zugeordnet ist und die Position des Objekts durch die Parameter des Koordinatensystems definiert ist.

3. Verfahren nach Anspruch 1 oder 2, **dadurch gekennzeichnet, dass** die detektierten Objekte auf der Grundlage ihres ausgewählten Identifizierungsparameters identifiziert werden.

4. Verfahren nach Anspruch 1, **dadurch gekennzeichnet, dass** Zugangspunkte angewendet werden, die gemäß einer WIFI- oder Bluetooth- oder Zigbie- oder NFC-Funkkommunikationsnorm oder -empfehlung arbeiten.

5. Verfahren nach einem der Ansprüche 1 bis 4, **dadurch gekennzeichnet, dass** die Zugangspunkte in einem Abstand von nicht mehr als 300 m voneinander installiert sind.

6. Verfahren nach einem der Ansprüche 1 bis 5, **dadurch gekennzeichnet, dass** die Zugangspunkte an Verkehrsknoten installiert sind.

7. Verfahren nach einem der Ansprüche 1 bis 5, **dadurch gekennzeichnet, dass** die Zugangspunkte an Straßenkreuzungen oder Übergängen installiert sind.

8. Verfahren nach einem der Ansprüche 1 bis 7, **dadurch gekennzeichnet, dass** die erfassten Objekte auf der Grundlage ihrer Trajektorie gruppiert sind.

9. Verfahren nach Anspruch 3, **dadurch gekennzeichnet, dass** die einzelnen Objekte durch ihre jeweiligen eindeutigen MAC-Adressen identifiziert werden.

10. Verfahren nach Anspruch 9, **dadurch gekennzeichnet, dass** die MAC-Adressen vor ihrer Verwendung anonymisiert werden.

11. Verfahren nach einem der Ansprüche 1 bis 10, **dadurch gekennzeichnet, dass** die erfassten Objekte auf der Grundlage von mindestens einer ihrer Trajektorien oder den Ergebnissen des angewandten mathematischen Modells kategorisiert werden.

12. Verfahren nach Anspruch 11, **dadurch gekennzeichnet, dass** die Objekte den Kategorien "Fußgänger" oder "mit einem Fahrzeug verbunden" zugeordnet werden.

13. Verfahren nach Anspruch 12, **dadurch gekennzeichnet, dass** die Kategorie "mit einem Fahrzeug verbunden" in öffentliche und private Verkehrsmittel unterteilt ist.

14. Verfahren nach Anspruch 12 oder 13, **dadurch gekennzeichnet, dass** die Zuordnung zu den Kategorien "Fußgänger" und "mit einem Fahrzeug verbunden" auf der eine Grundlage der Überwachung und Auswertung des Geschwindigkeitsparameters des überwachten Objekts durchgeführt wird.

15. Verfahren nach einem der Ansprüche 1 bis 14, **dadurch gekennzeichnet, dass** ein oder mehrere vordefinierte Unsicherheitszonen den Zugangspunkten zugeordnet sind, um falsche Daten aufgrund von Rauschen zu eliminieren.

## Revendications

1. Procédé pour suivre le mouvement et la trajectoire d'objets associés a des dispositifs sans fil, situés dans une zone prédéfinie,
dans lequel noeuds d'émetteur-récepteur qui communiquent avec les dispositifs de communication sans fil sont formées dans une zone prédéfinie,
les objets qui sont affectés aux dispositifs sans fil et qui entrent dans la zone des noeuds d'émetteur-récepteur ou des données sont situés dans cette région sont détectés par le noeuds d' émetteur-récepteur,
au moins un élément d'un groupe de données qui comprend le fait de l'unité de détection, le nombre d'objets détectés et la trajectoire des objets en mouvement détectés, est stocké,
les informations stockées sont mises à disposition pour un traitement ultérieur,
les points d'accès fonctionnant selon une norme de communication sans fil à courte portée, sont utilisés en tant que noeud d'émetteur-récepteur,
dans lequel les points d'accès sont installés à une certaine distance les unes des autres qui est adapté pour effectuer une communication sans fil de type poste à poste (P2P), entre les points d'accès,
dans lequel la position d'un objet observé dans la zone d'au moins deux points d'accès est défini par les points d'accès avec une résolution supérieure à la résolution d'un réseau de capture constitué par les points d'accès,
une intensité de signal émis par l'objet est mesurée au cours de la communication avec les au moins deux points d'accès et les données d'intensité de signal mesurées sont converties en un jeu de vecteurs,
le point d'accès le plus proche est déterminée à l'aide d'un poste à poste solution partagée;
dans lequel l'évaluation des dispositifs matériels non mobiles qui recherchent des points d'accès WiFi est évité par la sélection et en filtrant les objets qui exécutent la communication, mais non se déplacer, par en évaluant la jeu de vecteurs;
et l'analyse du mouvement des objets qui effectuent la communication et changent leur lieu en générant un historique pour chaque point d'accès le plus proche qui comprendra les points d'accès précédents et les horodatages de mesure appropriés pour calculer les paramètres essentiels, et de définir la vitesse du trafic, et de déduire du rôle du participant au trafic; par lequel
la collecte de données, l'analyse et l'évaluation des données se réalisent sans avoir besoin de serveur central, d'une manière P2P (poste à poste), par le traitement sur site et la communication P2P locale, et dans lequel définir le point d'accès le plus proche à l'aide d'une solution poste à poste partagée comprenant les étapes supplémentaires:
en se basant sur le fait que la relation d'adjacence est définie entre des points d'accès spécifiques, modélisation à chaque point d'accès par sa représentation appropriée, que le dispositif associé à un objet avec une capacité WIFI soit situé le plus près du point d'accès respectif, et
déterminer par ledit point d'accès respectif sur la base des vecteurs de force de signal provenant des postes adjacents et de ses propres mesures, que l'objet associé au dispositif soit le plus proche, ainsi que la probabilité du résultat de ladite détermination.

2. Procédé selon la revendication 1, **caractérisé en ce que** la région prédéfinie est associée à un système de coordonnées et la position de l'objet est définie par les paramètres du système de coordonnées.

3. Procédé selon la revendication 1 ou 2, **caractérisé en ce que** les objets détectés sont identifiés sur la base de leur parametre d'identificateur sélectionné.

4. Procédé selon la revendication 1, **caractérisé en ce que** des points d'acces fonctionnant selon une norme de communication sans fil WIFI ou Bluetooth ou Zigbie ou NFC ou une recommandation.

5. Procédé selon l'une quelconque des revendications 1 a 4, **caractérisé en ce que** les points d'acces sont installés a une distance d'au plus 300 m l'un de l'autre.

6. Procédé selon l'une quelconque des revendications 1 a 5, **caractérisé en ce que** les points d'acces sont installés aux noeuds de trafic.

7. Procédé selon l'une quelconque des revendications 1 a 5, **caractérisé en ce que** les points d'acces sont installés lors des croisements ou des jonctions routieres.

8. Procédé selon l'une quelconque des revendications 1 a 7, **caractérisé en ce que** les objets détectés sont groupés sur la base de leur trajectoire.

9. Procédé selon la revendication 3, **caractérisé en ce que** les objets individuels sont identifiés par leurs adresses MAC respectives respectives.

10. Procédé selon la revendication 9, **caractérisé en ce que** les adresses MAC sont anonymisées avant leur utilisation.

11. Procédé selon l'une quelconque des revendications 1 a 10, **caractérisé en ce que** les objets détectés sont classés sur la base d'au moins une de leurs trajectoires ou les résultats du modele mathématique appliqué.

12. Procédé selon la revendication 11, **caractérisé en ce que** les objets sont attribués aux catégories de «piétons» ou «associées au véhicule».

13. Procédé selon la revendication 12, **caractérisé en ce que** la catégorie "associé a un véhicule" est subdivisée en transport de véhicules public et privé, respectivement.

14. Procédé selon la revendication 12 ou 13, **caractérisé en ce que** l'affectation à des catégories "piéton" et "lié à un véhicule" est effectué sur la base de la surveillance et l'évaluation du paramètre de vitesse de l'objet surveillé.

15. Procédé selon l'une quelconque des revendications 1 à 14, **caractérisé en ce qu'**une ou plusieurs zones prédéfinies de l'incertitude associée aux points d'accès afin d'éliminer les données fausses causées par le bruit.
